# EUROPÄISCHE PATENTSCHRIFT

(11) **EP 2 574 422 B1**
(45) Veröffentlichungstag und Bekanntmachung des Hinweises auf die Patenterteilung: **12.08.2015**
(21) Anmeldenummer: 12006581.8
(22) Anmeldetag: 19.09.2012
(51) Int. Cl.: B23Q 7/04, B23Q 17/20

(54) **Vorrichtung und Verfahren zur Beförderung und Bearbeitung von Werkstücken**
Method and device for conveying and processing of workpieces
Dispositif et procédé destinés au transport et au traitement de pièces à usiner

(30) Priorität: 27.09.2011 DE 202011106104 U; 07.11.2011 DE 102011117731
(43) Veröffentlichungstag der Anmeldung: 03.04.2013
(73) Patentinhaber: Stuczys, Uwe, 33428 Harsewinkel (DE)
(72) Erfinder: Stuczys, Uwe, 33428 Harsewinkel (DE)
(74) Vertreter: Weeg, Thomas

(56) Entgegenhaltungen:
- EP-A1- 0 562 216
- EP-A1- 0 873 817
- EP-A1- 1 475 204
- EP-A2- 1 304 188
- DE-A1- 10 041 653

## Beschreibung

Die vorliegende Erfindung bezieht sich auf eine Vorrichtung und ein Verfahren zur Beförderung von Werkstücken nach den Oberbegriffen der Ansprüche 1 und 9.

Aus dem Stand der Technik ist es aus herkömmlichen Bearbeitungsmaschinen bekannt, zu bearbeitende Werkstücke in einen Transportschlitten mit einer Haltevorrichtung einzulegen, das Werkstück in der Haltevorrichtung zu verspannen und es dann mit dem Transportschlitten in eine Bearbeitungsposition zu befördern, in der es von Bearbeitungswerkzeugen bearbeitet werden kann. Die verschiedenen Arbeitsschritte des Bereitstellens des Transportschlittens, des Einlegens und Verspannens des Werkstücks und des Verfahrens des Transportschlittens mit dem Werkstück in die Bearbeitungsposition brauchen immer noch vergleichsweise viel Zeit.

Aus der Schrift EP 1 304 188 A2, welche die Basis für die Oberbegriffe der Ansprüche 1 und 9 darstellt, ist es bekannt, die Stellmotoren, die zum Einspannen des Werkstücks vorhanden sind, auch dazu zu nutzen, das Werkstück während einer Bearbeitung zu bewegen, um zusätzliche Bewegungsantriebe für das Werkzeug einzusparen. Die das Werkzeug haltende Bearbeitungseinheit kann starr bleiben und das Werkstück wird während der Bearbeitung mit ersten ersten und zweiten Aktuatoren bewegt, um dadurch die dritten Aktuatoren zur Bewegung des Werkzeugs einzusparen. Während der Bewegung bleibt das Werkstück von gesonderten Stangen und Saugmitteln geklemmt gehalten.

Aus der Schrift EP 1 475 204 A1 ist es bekannt, ein Werkstück vor der Bearbeitung mit Messmitteln zu vermessen. Die Messdaten werden von einer Kontrollvorrichtung ausgewertet. Die Vermessung des Werkstücks dient der Kontrolle der richtigen Position des Werkstücks in der Bearbeitungsmaschine.

Demgemäß ist es die Aufgabe der vorliegenden Erfindung, die Maschineneffizienz und die Bearbeitungsgeschwindigkeit zu steigern.

Die Aufgabe wird für eine gattungsgemäß Vorrichtung nach den kennzeichnenden Merkmalen des Anspruchs 1 gelöst.

Durch die erfindungsgemäße Ausgestaltung der Beförderungsvorrichtung kann das zu bearbeitende Werkstück erheblich schneller eingespannt und befördert werden. Durch die Bewegung der Klemmelemente aus der Bestückungsposition in die Klemmposition wird im Vergleich zur herkömmlichen Technik mit einer einzigen Bewegung der virtuelle Transportschlitten bereitgestellt und gleichzeitig das Werkstück in die Klemmelemente eingespannt. Anstelle eines schweren Transportschlittens mit darauf angeordneten Klemmelementen sind erfindungsgemäß nur noch die Klemmelemente zusammen mit den jeweiligen Linearmotoren zu bewegen, wobei jedes Klemmelement über einen eigenen Linearmotor beweglich ist. Erfindungsgemäß wird die klemmende Fixierung des Werkstücks zunächst nur durch die Verstellbewegung der Klemmelemente aus der Bestückungsposition in die Klemmposition hergestellt. Sodann erfolgt die Messung der geometrischen Maße des Werkstücks. Bei den nachfolgenden Bewegungen des Werkstücks wird dieses nicht mehr über die Messung der Klemmkraft, sondern über die Einrechnung der geometrischen Maße des Werkstücks in die Bewegungsprofildaten der Linearmotoren in einer geklemmten Lage zwischen den Klemmelementen gehalten. Die Bewegung der Linearmotoren nach der Vorgabe der Bewegungsprofildaten erfolgt so genau, dass dabei die Klemmkraft zwischen den Klemmelementen erhalten bleibt.

Erfindungsgemäß weisen ein oder mehrere Linearmotoren einen Sensor auf, mit dem das Erreichen der Klemmposition messbar ist. Stellt der Sensor fest, dass die Klemmposition erreicht worden ist, und ermittelt die Steuerungssoftware die ist-Koordinaten der Klemmposition, können diese mit den in der Steuerungssoftware hinterlegten Soll-Koordinaten der Klemmposition verglichen werden. Die Vorrichtung kann dadurch Maßungenauigkeiten des Werkstücks schon bei der Klemmung feststellen. Die von der Steuerungssoftware im Rahmen des Vergleichs ermittelten Maßungenauigkeiten des Werkstücks können bei der nachfolgenden Bearbeitung des Werkstücks bei der Steuerung der Bearbeitungswerkzeuge unmittelbar berücksichtigt werden. So ist es möglich, eventuelle Ungenauigkeiten des Werkstücks durch eine die Maßabweichungen adaptierende Bearbeitung und/oder Positionierung auszugleichen. Der Sensor kann beispielsweise ein Druck- oder Lastsensor sein. Auch kann ein Schallsensor als Sensor zur Abprüfung einer Berührung zwischen dem Klemmelement und dem Werkstück verwendet werden, oder es wird eine Kombination von möglichen Sensoren verwendet. Die Steuerung kann den Positionspunkt des Linearmotors in der Klemmposition ermitteln und mit dem Sollwert vergleichen, den der Linearmotor bei einem maßgenau bezüglich der Soll-Maße gestalteten Werkstück hätte einnehmen müssen. Bei Abweichungen kann daraus ein neuer IstWert der Abmessungen des Werkstücks für die Berechnung der nachfolgenden Bewegungen und Bearbeitungen abgeleitet werden.

Gegenüber einer Lösung, bei das Werkstück durch eine kontinuierliche Messung und Nachregelung der Klemmkraft in der Klemmposition zwischen den Klemmelementen gehalten wird, besteht bei der Aufrechterhaltung der Klemmlage des Werkstücks durch die Bewegungsprofildaten der Linearmotoren, in die die geometrischen Maße des Werkstücks eingerechnet sind, der Vorteil, dass die Linearmotoren nur die vorgegebenen Bewegungsprofildaten abfahren müssen. Dies ist viel schneller und präziser möglich als bei einer Lösung, bei der die Motoren bereits mit einer höheren Leistung laufen, aus der höheren Leistung die Klemmkräfte erkannt und die Motoren dann trotz hohem Leistungsniveau mit hoher Reaktionsgeschwindigkeit so fein nachgeregelt werden müssen, dass das Werkstück zwar sicher gehalten, aber nicht beschädigt wird. Die Linearmotoren können nach einem Master-/Slave-Konzept geregelt sein, wonach die elektronische Steuerung die Bewegungsprofildaten nur für einen einzigen der vorhandenen Linearmotoren genau berechnet und die übrigen Linearmotoren nur dem Master-Linearmotor unter Einrechnung der geometrischen Maße des Werkstücks folgen.

Mit der Bestückungsposition ist eine Position gemeint, in der sich die Klemmelemente in einer Position befinden, in der das Werkstück ohne eine Kollision mit einem oder mehreren der Klemmelemente für die Übernahme durch die Klemmelemente bereit gehalten werden kann. Die Klemmelemente halten in der Bestückungsposition noch einen Abstand zu den Umfangsmaßen des Werkstücks. In der Klemmposition haben sich die Klemmelemente so weit an das Werkstück angenähert, dass das Werkstück aufgrund der von den Klemmelementen auf das Werkstück eingebrachten Klemmkräfte von den Klemmelementen gehalten ist. Die Linearmotoren drücken die Klemmelemente so fest gegeneinander, dass das Werkstück nicht aus dem Griff der Klemmelemente herausfallen kann. In der Bearbeitungsposition wird das Werkstück von den Klemmelementen für Bearbeitungen mit einem oder mehreren Bearbeitungswerkzeugen bereitgehalten. In der Entnahmeposition kann das Werkstück nach der erfolgten Bearbeitung wieder aus der Vorrichtung entnommen werden.

Um eine Klemmkraft erzeugen zu können, müssen immer zumindest zwei Linearmotoren gegeneinander wirken. Entweder dient einer der beiden Motoren als ein Anschlag, und der andere Linearmotor wird gegen die Kraft des anderen als Anschlag gesteuerten Linearmotors gesteuert, oder es werden beide Motoren gegeneinander gesteuert. Zur klemmenden Fixierung eines Werkstücks können also sinnvoll 2, 4 oder 6 Klemmelemente mit jeweiligem Linearmotor verwendet werden. Die Zahl und Größe der verwendeten Klemmelemente hängt insbesondere von der Größe und Schwere des zu transportierenden Werkstücks ab, aber auch davon, ob die Klemmung nur in einer Achsrichtung oder in mehreren Achsrichtungen bewirkt werden soll. Wenn die Klemmelemente das Werkstück auch noch bei einer Bearbeitung halten sollen, kommen noch die Kräfte hinzu, die bei der Bearbeitung des Werkstücks auftreten. Eine Klemmkraft kann von den Klemmelementen je nach ihrer räumlichen Anordnung in nur einer Richtung erzeugt werden, aber auch in mehreren Richtungen. Das Erreichen der Klemmposition bei der Bewegung der Klemmelemente aus der Bestückungsposition in die Klemmposition kann beispielsweise über Mikrofonoder Kontaktsensoren erkannt werden. Nehmen diese Sensoren einen Kontakt des Werkstücks mit einem Klemmelement wahr, wird der elektronischen Steuerung das Erreichen der Klemmposition gemeldet, und die elektronische Steuerung ermittelt sodann die sich aus der Klemmposition des Werkstücks ergebenden Maße des Werkstücks, die aus der aktuellen Position der Linearmotoren, der Klemmelemente und/oder durch sonstige Messmittel erkennbar sind.

Weisen die von der Vorrichtung zu transportierenden Werkstücke immer ein gleiches Breitenmaß auf, ist es auch möglich, neben der Klemmung eines Werkstücks mittels der von den Linearmotoren beweglichen Klemmelemente in einer Achsrichtung eine zusätzliche Klemmung des Werkstücks in einer zweiten Achsrichtung herbei zu führen, wobei für diese Klemmung anstelle der Linearmotoren auch ein anderer Antrieb, beispielsweise mit hydraulisch oder pneumatisch betätigten Antriebselementen, verwendet werden kann.

Linearmotoren sind vorteilhaft, weil sie leistungsstark mit einer starken Beschleunigung, sehr hoher Geschwindigkeit und einer hochgradigen Positioniergenauigkeit bewegt werden können. Insbesondere Servo-Linearmotoren sind für den vorliegenden Anwendungsfall gut geeignet, die über einen Datenbus mit der Steuerung kommunizieren. Linearmotoren arbeiten zudem nahezu verschleißfrei, die Vorrichtung benötigt somit nur noch minimalen Wartungsaufwand. Durch den Wegfall eines schweren Transportschlittens werden die bewegten Massen kleiner und die Beschleunigungs- und Bremsmomente sind leichter beherrschbar. Dadurch können die notwendigen Bewegungen für den Transport des Werkstücks schneller erfolgen.

Die elektronische Steuerung verfügt über Hardware- und Softwarekomponenten. Die Hardware beinhaltet einen Programmable Logic Controller - PLC -, der die Daten für das Positionieren, den Gleichlauf der Linearmotoren und die Bahninterpolation berechnet. Zu den Hardware-Bausteinen der elektronischen Steuerung zählen außerdem die elektronischen Leistungsteile für die Linearmotoren und Positionssensoren zur Ermittlung der Ist-Position der Linearmotoren, die jeweils mit dem PLC verbunden sind. Die Softwarekomponenten beinhalten ein PLC-Softwareprogramm, das die Soll-Positions- und Bewegungskoordinaten für die einzelnen Linearmotoren rechnerisch und/oder aus gespeicherten Daten ermittelt, die Ist-Positions- und Bewegungskoordinaten der einzelnen Linearmotoren ermittelt und durch einen Abgleich der Soll-Positions- und Bewegungskoordinaten mit den Ist-Positions- und Bewegungskoordinaten Stellbefehle an die elektronischen Leistungsteile für die Linearmotoren ermittelt und an diese überträgt. Das PLC-Softwareprogramm ist so programmiert, dass die Abstandsmaße der Linearmotoren zueinander, die diese in der Klemmposition zueinander hatten, während der Bewegung über eine oder beide Förderstrecken hinweg beibehalten werden, indem diese in die Berechnung der Stellbefehle einfließen. Auf diese Weise bleibt die Klemmung des Werkstücks zwischen den Klemmelementen auch während der Bewegung der Klemmelemente entlang zumindest einer Förderstrecke aufrecht erhalten.

Von besonderer Bedeutung ist die synchrone Bewegungssteuerung der Linearmotoren. Würden in der Bewegungssteuerung der einzelnen Linearmotoren entlang der Förderstrecken zu große Ungenauigkeiten auftreten, könnte die Klemmkraft zu schwach werden und das Werkstück fällt auf den Boden, oder die Klemmkraft wird zu hoch und die Klemmelemente, die Linearmotoren und/oder das Werkstück wird beschädigt, oder das Werkstück verrutscht in seiner Lage und die Bearbeitung kann nicht ausreichend präzise vorgenommen werden. Durch die Steuerung der Bewegung aller Linearmotoren über eine gemeinsame Software kann der Synchronlauf der Linearmotoren so präzise gewährleistet werden, dass sich die Klemmkraft der Klemmelemente nur innerhalb zulässiger Toleranzen verändert. Die Steuerung muss dazu die Ist- und Sollpositionen der Linearmotoren mit einer geeigneten Software so schnell und präzise verrechnen, dass sich im Verhältnis zur Bewegungsgeschwindigkeit immer noch eine ausreichende Klemmkraft ergibt. Es kann ausreichen, die Klemmkraft nur während einer Förderstrecke, insbesondere von der Klemmposition in die Bearbeitungsposition, aufrecht zu erhalten, da die Bearbeitung durch die Bearbeitungswerkzeuge positionsgenau erfolgen muss. Nach der Bearbeitung kann es genügen, das Werkstück weniger stark geklemmt oder nur auf Auflegeflächen aufliegend in die Entnahmeposition zu verbringen.

Die erfindungsgemäße Vorrichtung benötigt nur einen vergleichsweise geringen Bauraum für die Beförderung des Werkstücks. Es bleibt ausreichend Platz, um das Werkstück gut zugänglich mit den Bearbeitungswerkzeugen bearbeiten zu können. Durch die geringeren Toleranzen in den jeweiligen Schnittstellen - der Klemmelemente zum Werkstück und der Klemmelemente zum Transportantrieb - wird die Positioniergenauigkeit und damit die Präzision in der Bearbeitung des Werkstücks gesteigert.

Eine Umstellung der Transportvorrichtung auf neue Teile mit anderen Abmessungen ist werkzeuglos nur über den Aufruf neuer Maße in der Steuerung möglich, die Vorrichtung muss nicht mehr aufwendig umgebaut werden. Eine Losgröße 1 ist mit der erfindungsgemäßen Vorrichtung ohne einen Umbau und Zeitverlust der Maschine möglich.

Die erste und die zweite Förderstrecke können sich nur durch die Förderrichtung unterscheiden, sie können aber auch in der gleichen Förderrichtung hintereinander liegen und/oder unterschiedlich lang sein, je nachdem, wo das Werkstück in die Vorrichtung eingelegt und wieder entnommen wird. Zwischen der ersten und zweiten Förderstrecke können noch eine oder mehrere Bewegungen des Werkstücks und der dieses haltenden Klemmelemente erfolgen, beispielsweise, um das Werkstück während einer Bearbeitung richtig in Bezug auf die räumliche Position eines Bearbeitungswerkzeugs zu positionieren.

Als Messmittel können verschiedene Messmitteltypen verwendet werden. Vorteilhaft werden digital bei Kontakt schaltende Messmittel verwendet. Es können Positions-, Druck-, Ultraschall- oder optische Schalter als Messmittel verwendet werden. Als optische Schalter kommen insbesondere Lasersensoren in Betracht, die sehr genau auch kurze Distanzen messen können. Die Schaltsignale der Messmittel können von der Steuerung mit einer geeigneten Software ausgewertet werden. Die Auswertung über eine geeignete Software eröffnet die Möglichkeit, eine Justage für den Schaltpunkt über einen Softwareparameter zu hinterlegen oder eine einstellbare materialabhängige Abschaltung, beispielsweise bei harten oder weichen Kanten des Werkstücks, zu benutzen. Die materialabhängige Abschaltung kann unterschiedlich lange Bremswege und/oder Rückstellwege für die Klemmelemente nach einem Abschaltsignal vorsehen.

Nach einer Ausgestaltung der Erfindung weist die Vorrichtung eines oder mehrere Bearbeitungswerkzeuge zur Bearbeitung der Werkstücke auf, ein Werkstück ist mit den Bearbeitungswerkzeugen in der Bearbeitungsposition bearbeitbar, die Klemmung mit den Klemmelementen bleibt während der Bearbeitung durch die Bearbeitungswerkzeuge aufrecht erhalten und die Steuerung koordiniert die Bewegung der Bearbeitungswerkzeuge und der Klemmelemente in die Bearbeitungsposition und in der Bearbeitungsposition miteinander. Durch die Kombination des Transports und der Bearbeitung in einer Maschine muss das Werkstück nicht mehr abgelegt oder umgegriffen werden. Die Bewegungen der Transportvorrichtung und der Bearbeitungswerkzeuge können aufeinander abgestimmt werden. So ist es möglich, das Werkstück in Längsrichtung mittels der Klemmelemente zu bewegen, während das Bearbeitungswerkzeug an einem Portal gehalten ist und nur in Querrichtung beweglich ausgestaltet ist. Durch die Kombination der Querbewegung des Bearbeitungswerkzeugs und der Längsbewegung des Werkstücks kann das Bearbeitungswerkzeug an jede Stelle der Oberfläche des Werkstücks in Ansatz gebracht werden. An einem Portal können auch mehrere Bearbeitungswerkzeuge gleichzeitig beweglich angeordnet sein, und zwar abhängig oder unabhängig voneinander. Während der Bearbeitung kann das Werkstück insbesondere bei vergleichsweise hohen Bearbeitungskräften zusätzlich durch eine Stütze abgestützt werden, die aus einer Ruheposition in eine Stützposition und nach Beendigung der Bearbeitung wieder in die Ruheposition beweglich ist. Auch während einer Bearbeitung eines Werkstücks kann die klemmende Halterung des Werkstücks zwischen den Klemmelementen nur durch die Berechnung der Bewegungsprofildaten unter Einrechnung der geometrischen Maße des Werkstücks und dem Abfahren der Bewegungsprofildaten durch die Linearmotoren erfolgen.

Nach einer Ausgestaltung der Erfindung dient in der Klemmposition ein erstes Klemmelement als Festanschlag und ein zweites Klemmelement ist aus seiner Bestückungsposition gegen das erste Klemmelement beweglich. Durch die Verwendung eines Klemmelements als Festanschlag kann im Rechenmodell der Steuerung von der Position des als Festanschlag genutzten Klemmelements ausgegangen werden, das vereinfacht und beschleunigt die Verrechnung der Positions- und Bewegungsdaten für die einzelnen Linearmotoren. Die Verrechnung eines Klemmelements als Festanschlag durch die Steuerung kann bei den nachfolgenden Bewegungen und in der Bearbeitungsposition aufrecht erhalten werden.

Nach einer Ausgestaltung der Erfindung weist das erste und/oder zweite Klemmelement eine Kontaktfläche zum Werkstück aus einem nichtmetallischen Werkstoff auf. Die nichtmetallischen Werkstoffe wie beispielsweise Kunststoff oder Gummi zeichnen sich durch eine höhere Flexibilität und Rückverformbarkeit aus. Über die Flexibilität des Werkstoffs können übermäßige Kraftspitzen beim Einklemmen des Werkstücks vermieden werden. Entsprechende Kraftspitzen können insbesondere auftreten, wenn ein Sensor das Erreichen der Klemmposition der Klemmelemente an die elektronische Steuerung gemeldet und die elektronische Steuerung daraufhin einen Stopp der Bewegung der Linearmotoren und damit der Klemmelemente ausgelöst hat, der verbleibende Bremsweg der zu stoppenden Maschinenelemente jedoch länger ist als der ohne Deformationen von Maschinenteilen und/oder des Werkstücks verfügbare Restweg zwischen den Klemmelementen und dem Werkstück. Wenn es möglich ist, zumindest einen Teil des überschüssigen Bremsweges durch eine Verformung der Kontaktfläche aus einem nichtmetallischen Werkstoff zum Werkstück bereit zu stellen, können die auf das Werkstück einwirkenden Kraftspitzen vermindert und ein Teil der Bremskräfte in Rückstellkräfte umgewandelt werden, die sich bei einer Verformung der Kontaktfläche eines Klemmelements aufbauen. Durch die Anpassung der Form der Kontaktfläche an die Form des Werkstücks und den damit einher gehenden Formschluss erhöht sich die Haltesicherheit, mit der die Klemmelemente das Werkstück zwischen sich halten. Zudem verfügen viele nichtmetallische Werkstoffe über höhere Haftreibungskoeffizienten als metallische Werkstoffe, wodurch sich die Griffsicherheit zusätzlich erhöht. Wird nach einer Weiterbildung dieser Ausgestaltung die Kontaktfläche eines in einer Klemmrichtung wirkenden Klemmelements härter ausgestaltet als die Kontaktfläche eines anderen in derselben Klemmrichtung wirkenden Klemmelements, kann die Position des Klemmelements mit der härteren Kontaktfläche von der elektronischen Steuerung bei der Berechnung der geometrischen Maße sowie der Bewegungsprofildaten als Referenzposition weiterverarbeitet werden, weil sich hier aufgrund der geringeren Flexibilität der härteren Kontaktfläche geringere Differenzen zwischen den tatsächlichen geometrischen Maßen des Werkstücks und den aufgrund der Positionen der Klemmelemente in der Stillstands- bzw. Klemmposition ergebenden Messwerte ergeben als bei einer Referenzierung der Werte des Klemmelements mit der weicher ausgestalteten Kontaktfläche. Eine Kontaktfläche kann beispielsweise von der Oberfläche eines hohlen oder massiven Gummischlauchs oder -Zylinders, -block oder -leiste ausgebildet sein. Anstelle von Gummi können auch andere flexible Materialien verwendet sein.

Nach einer Ausgestaltung der Erfindung weist die elektronische Steuerung einen Bremsmodus, in dem nach einem Kontaktsignal eines Sensors zur Messung der Erreichung der Klemmposition die Bewegung der Klemmelemente bis zu einer Stillstandsposition anhaltbar ist, und einen Rückstellmodus auf, in dem ein oder mehrere Klemmelemente aus der Stillstandsposition zurück in die Klemmposition beweglich sind. Die elektronische Steuerung schaltet die Bewegungssteuerung der in einer Klemmrichtung aktiven Klemmelemente in den Bremsmodus, wenn sie von einem diese Klemmrichtung überwachenden Sensor einen Kontakt gemeldet bekommen hat. Im Bremsmodus können die Klemmelemente abgebremst werden, um Kollisionskräfte zwischen den Klemmelementen und dem Werkstück und daraus resultierenden eventuellen Beschädigungen des Werkstücks möglichst gering zu halten. Im Rückstellmodus kann die elektronische Steuerung die Klemmelemente zurückfahren, beispielsweise um die Weglänge, die die Klemmelemente noch im Bremsmodus zurückgelegt haben, nachdem die Sensoren einen Kontakt eines Klemmelements mit dem Werkstück gemeldet haben, oder weniger als diese Weglänge, um die Klemmkräfte noch hoch zu halten. Eine solche Steuerung mit Brems- und Rückstellmodus ist insbesondere dann vorteilhaft, wenn die Weglänge des Bremsweges zumindest teilweise von flexiblen Pufferelementen aufgenommen wird, wie das bereits vorstehend beschrieben ist.

Nach einer Ausgestaltung der Erfindung sind in der Steuerung Soll-Maße für das Werkstück verfügbar und die Steuerung
- steuert die Klemmelemente anhand der Soll-Maße für das Werkstück in die Bestückungsposition und aus der Bestückungsposition in die Klemmposition,
- ermittelt die Ist-Position eines oder mehrerer Linearmotoren in ihrer Klemmposition und bestimmt daraus korrigierte Ist-Maße für das Werkstück, und
- steuert die Bewegungen der Klemmelemente entlang der Förderstrecken mittels der korrigierten Ist-Maße für das Werkstück.

Die Steuerung wechselt also das Maßgerüst, auf dessen Basis sie die SollPositionen für die Linearmotoren berechnet, von den in der Steuerung zunächst als Ausgangsgröße verfügbaren Soll-Maßen auf die sich aus den Positionen der Klemmelemente in der Klemmposition ergebenden Ist-Maße des Werkstücks, sobald diese bekannt sind. Die Ist-Maße können als absolute oder relative Werte in der Steuerung zwischengespeichert werden. Da die Ist-Maße eines Werkstücks von den in der Steuerung verfügbaren Soll-Maßen abweichen können, wird die Verwendung der Ist-Maße in dem Moment wichtig, in dem das Werkstück von den Klemmelementen erfasst und während eines Transport- bzw. Bearbeitungsvorgangs gehalten werden soll. Würde die Steuerung beim Transport und der Bearbeitung noch weiter von den in der Steuerung verfügbaren Soll-Maßen ausgehen, könnte das Werkstückherabfallen, verrutschen oder beschädigt werden. Da aber die genauen Ist-Maße des Werkstücks in dem Moment verfügbar werden, in dem die Klemmelemente ihre Klemmposition erreichen, reicht dieser Zeitpunkt aus, das Maßgerüst von den ungenauen Soll-Maßen auf die genaueren Ist-Maße umzustellen. Zudem wird durch die neuen Ist-Maßwerte die Verrechnung von Computerdaten einfacher und schneller, was bei der Rechnerbelastung durch die für die Steuerung erforderlichen Auswertungen der Sensorsignale ein wichtiger Punkt ist.

Nach einer Ausgestaltung der Erfindung weist die Vorrichtung zumindest eine querbeweglich angeordnete Trägerschiene auf, auf der zwei längsbewegliche Linearmotoren angeordnet sind. Während die Linearmotoren nur auf der Trägerschiene in Längsrichtung an der Trägerschiene entlang positionsgenau beweglich sind, können die Klemmelemente der Vorrichtung durch eine Querbeweglichkeit der Trägerschiene auch in Querrichtung an unterschiedliche Geometrien von verschiedenen Werkstücken angepasst werden. Bei einer Trägerschiene können darauf zwei Linearmotoren angeordnet sein, die zwischen sich eine Klemmkraft aufzubauen vermögen. Bei zwei Trägerschienen mit jeweils zwei darauf angeordneten Linearmotoren kann ein Werkstück an zwei Stellen von den Klemmelementen eingeklemmt gehalten werden, wobei alle vier Linearmotoren in Längs- und Querrichtung an die Abmessungen des Werkstücks anpassbar sind. Die Einstellung einer Trägerschiene in Querrichtung auf eine Sollposition muss nicht zwangsläufig mit derselben Präzision erfolgen wie die Einstellung einer Klemmposition mit den Halteelementen und ihrer Aufrechterhaltung während der Transportbewegung und eventuell der Bearbeitung, weil die richtige Querposition je nach Anwendungsfall unter Umständen einen nicht so großen Einfluss auf die Erhaltung der Klemmkräfte ausübt wie die Einstellung der Klemmelemente in Längsrichtung, wenn das Werkstück in Längsrichtung bewegt werden soll.

Nach einer Ausgestaltung der Erfindung ist einem oder mehreren Klemmelementen eine Auflegefläche zugeordnet. Durch die Auflegefläche wird das Auflegen eines Werkstücks in der Bestückungsposition erleichtert. Zudem bildet die Auflegefläche eine definierte Höhenlage für das Werkstück aus, die bei der Steuerung der Bearbeitungswerkzeuge berücksichtigt werden können. Das Werkstück wird während der Bearbeitung von den Auflegeflächen abgestützt, so dass es nicht erforderlich ist, sämtliche für die Bearbeitung erforderlichen Haltekräfte mit der Klemmung zu erzeugen. Bei einer Bearbeitung können die Auflegeflächen das Eigengewicht des Werkstücks tragen sowie den von oben von einem Bearbeitungswerkzeug wie beispielsweise einem Bohrer oder Fräswerkzeug auf das Werkstück ausgeübten Druck aufnehmen. Von diesen Kräften sind die Klemmelemente dann entlastet. Durch die Adhäsionskräfte und den Reibwiderstand des Werkstücks auf den Auflegeflächen ist zudem die Neigung des Werkstücks begrenzt, sich infolge der einwirkenden Bearbeitungskräfte in der Bearbeitungsposition zu verschieben.

Für ein gattungsgemäßes Verfahren wir die Aufgabe mit den kennzeichnenden Merkmalen des Anspruchs 9 gelöst.

Nach einer Ausgestaltung der Erfindung
- schaltet die elektronische Steuerung in einen Bremsmodus um, nachdem ein Sensor einen Kontakt eines Klemmelements mit dem Werkstück gemeldet hat,
- hält die elektronische Steuerung im Bremsmodus die Bewegung der Klemmelemente bis zu einer Stillstandsposition an,
- schaltet die elektronische Steuerung nach dem Erreichen der Stillstandsposition in einen Rückstellmodus um, und
- die elektronische Steuerung bewegt im Rückstellmodus ein oder mehrere Klemmelemente aus der Stillstandsposition zurück in die Klemmposition.

Zu den Vorteilen des erfindungsgemäßen Verfahrens sowie der weiteren verfahrensmäßigen Ausgestaltungen der Erfindung gelten die vorstehenden Erläuterungen zum entsprechenden Vorrichtungsanspruch entsprechend.

Es wird ausdrücklich darauf hingewiesen, dass jede der vorstehend beschriebenen Ausgestaltungen für sich, aber auch in einer beliebigen Kombination mit einem oder mehreren der übrigen Unteransprüche kombinierbar ist, soweit dies nicht durch technische Zwänge ausgeschlossen erscheint.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine erfindungsgemäße Vorrichtung mit den Klemmelementen in einer Klemmposition, und
- Fig. 2:: die Vorrichtung aus Fig. 1 mit den Klemmelementen in einer Bearbeitungsposition.

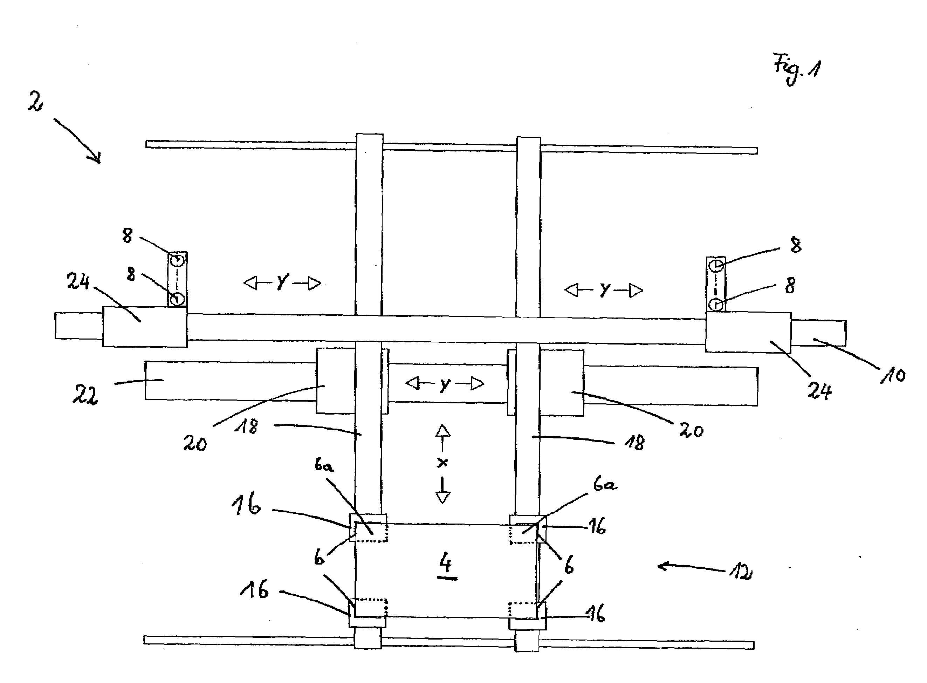

In Fig. 1 ist eine Vorrichtung 2 gezeigt, in der ein Werkstück 4 von Klemmelementen 6 gehalten ist. Im Ausführungsbeispiel umgreifen die Klemmelemente 6 die vier Ecken des rechteckigen Werkstückes 4, das beispielsweise ein Brett für ein Möbelstück sein kann, in das verschiedene Löcher gebohrt werden müssen, in die dann Beschlagteile eingesetzt werden können. Die Klemmelemente 6 müssen ein Werkstück 4 allerdings nicht um die Ecken umgreifen, sie können auch an nur einer Seite anliegen.

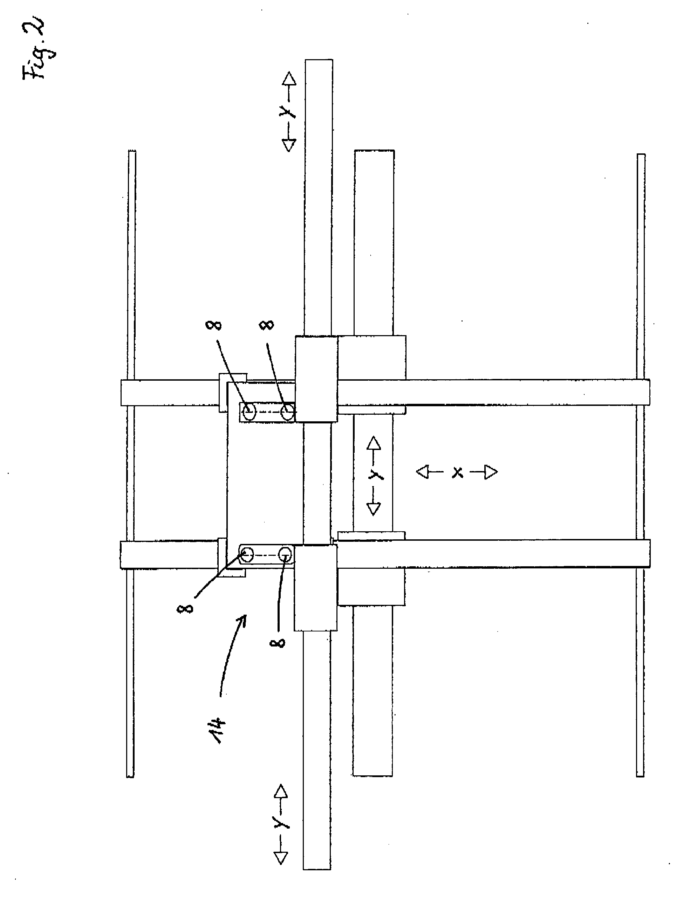

Das Werkstück 4 soll mit den Bearbeitungswerkzeugen 8 bearbeitet werden. Im Ausführungsbeispiel sind die Bearbeitungswerkzeuge 8 an einem Portal 10 beweglich befestigt. Über Stellmotoren sind die Bearbeitungswerkzeuge 8 in Querrichtung y beweglich. In Fig. 1 sind die Bearbeitungswerkzeuge 8 in einer Ausgangsstellung gezeigt, in der sie darauf warten, dass das Werkstück 4 aus der in Fig. 1 gezeigten Klemmposition 12 in die in Fig. 2 gezeigte Bearbeitungsposition 14 überführt wird.

Erreicht das Werkstück 4 die Bearbeitungsposition 14, werden die Bearbeitungswerkzeuge 8 auf das Werkstück 4 zu bewegt, um dort mit den Werkzeugen vorprogrammierte und von der zeichnerisch nicht näher dargestellten Steuerung gesteuerte Bearbeitungen vorzunehmen. Die Bearbeitungen können aber auch von Werkzeugen ausgeführt werden, die nicht von der Steuerung gesteuert sind, die auch die Klemmelemente 6 steuert. Die erste Förderstrecke, entlang der das Werkstück 4 in der Vorrichtung 2 zu befördern ist, erstreckt sich zunächst von der in Fig. 1 dargestellten Klemmposition 12 bis zur in Fig. 2 dargestellten Bearbeitungsposition 14. Entlang dieser ersten Förderstrecke soll das Werkstück 4 ausschließlich von den Klemmelementen 6 gehalten sein. Die Klemmelemente 6 können eine Auflegefläche 6a aufweisen, auf die das Werkstück 4 aufgelegt ist. Eine Auflegefläche 6a ist insbesondere in der zeichnerisch nicht näher dargestellten Bestückungsposition von Vorteil. Wenn das Werkstück 4 nicht von einer Bedienperson oder einem Roboter in einer Übernahmehöhe festgehalten oder auf einer gesonderten Ablagefläche vorgehalten werden soll, können die Klemmelemente 6 in der Bestückungsposition zunächst in einem gewissen Abstand zu den Ecken des Werkstücks 4 in der gewünschten Bestückungsposition vorgehalten werden. Der Abstand ist allerdings nicht so groß, dass auch die Auflegeflächen 6a der Klemmelemente 6 so weit von der Sollposition des Werkstücks 4 in der Klemmposition 12 entfernt sind, dass das Werkstück 4 nicht mehr auf die Auflegeflächen 6a aufgelegt werden kann. Die Auflegeflächen 6a sind im Ausführungsbeispiel durch gepunktete Linien in Fig.1 angedeutet.

Jedes der Klemmelemente 6 kann über einen eigenen Linearmotor 16 in Längsrichtung x entlang der Trägerschiene 18 verfahren werden. Um ein Werkstück 4 aus der Klemmposition 12 in die Bearbeitungsposition 14 zu verbringen, müssen die Klemmelemente 6 jedoch synchron zueinander bewegt werden. Die Synchronisierung der Bewegung muss sowohl hinsichtlich der beiden Klemmelemente 6, die sich auf einer gemeinsamen Trägerschiene 18 bewegen, als auch zu den beiden Klemmelementen 6 hergestellt sein, die sich auf der gegenüberliegenden Trägerschiene 18 bewegen.

Wenn eine Trägerschiene 18 beispielsweise 5000 mm lang ist, befinden sich die Klemmelemente 6 zunächst in einer Bestückungsposition. Dazu ist jeder der Linearmotoren 16 bzw. das zugehörige Klemmelement 6 in einer entsprechenden Position an der Trägerschiene 18. Bei einer gespeicherten Soll-Länge des Werkstücks 4 von 600 mm können sich die in Förderrichtung vorderen Linearmotoren 16 bzw. das die Klemmelemente 6 beispielsweise in der Position 620 mm und die in Förderrichtung gesehen hinteren Linearmotoren 16 bzw. Klemmelemente 6 in der Position 0 mm entlang der jeweiligen Trägerschiene 18 befinden. Zwischen den vorderen und hinteren Linearmotoren 16 bzw. Klemmelementen 6 befindet sich also ein Abstand von 620 mm. Die Bestückungsposition lässt in der Länge auf diese Weise 20 mm Luft für das einzulegende Werkstück. Sodann werden die Klemmelemente 6 in die Klemmposition 12 bewegt. Da das Erreichen der Klemmposition 12 durch Sensoren überwacht wird, stellen sich die Klemmelemente 6 genau in die gewünschte Klemmposition 12 ein.

Wenn die Ist-Länge des Werkstücks 4 genau der Soll-Länge von 600 mm entspricht, können die hinteren Linearmotoren 16 in einem Ausführungsbeispiel nur die hinteren Klemmelemente 6 in eine Position 20 mm bei in der Position 620 mm feststehenden vorderen Klemmelementen 6 bewegen, um die Klemmposition 12 aller Klemmelemente 6 zu erreichen. Es ist alternativ nach einem anderen Ausführungsbeispiel auch möglich, die vorderen Klemmelemente 6 in die Position 610 mm und die hinteren Klemmelemente 6 in die Position 10 mm zu verfahren, um eine Klemmposition 12 zu erreichen. In dieser Klemmposition 12 beträgt der Abstand zwischen den vorderen und hinteren Klemmelementen 6 ebenfalls 600 mm. Da bei diesen beiden Ausführungsbeispielen das Soll- und das Ist-Maß übereinstimmen, brauchen die in der elektronischen Steuerung gespeicherten Sollmaße nicht korrigiert zu werden.

Die elektronische Steuerung muss dann anhand der ermittelten Ist-Länge des Werkstücks von 600 mm die Bewegungsprofildaten für die Linearmotoren 16 bestimmen. Soll eine Bearbeitung des Werkstücks 4 in der Bearbeitungsposition 14 in einer Position 4200 mm des vorderen Linearmotors 16 bzw. des vorderen Klemmelements 6 erfolgen, muss der vordere Linearmotor 16 gemäß dem ersten vorstehenden Beispiel von der Position 620 mm bis zur Position 4200 mm als Strecke bewegt werden. Um auch am Ende der Strecke das Werkstück 4 in der Klemmposition 12 zwischen den vorderen und hinteren Klemmelementen 6 zu halten, muss der hintere Linearmotor 16 von der Position 20 mm in die Position 3600 mm bewegt werden, um den gleichen Abstand zum vorderen Linearmotor 16 gemäß der Länge 600 mm des Werkstücks 4 einzuhalten. Wenn die Beschleunigung, Geschwindigkeit und Abbremsung der vorderen und hinteren Linearmotoren 16 auf der jeweils zurückzulegenden Strecke von 3580 mm identisch erfolgt und sich die Linearmotoren 16 anhand der Bewegungsprofildaten synchron bewegen, bleibt auch auf der gesamten Förderstrecke der Linearmotoren 16 die Klemmung der Klemmelemente 6 auf das Werkstück 4 identisch. Auf diese Weise ist es möglich, die auf das Werkstück 4 einwirkende Klemmkraft der Klemmelemente 6 von der Klemmposition 12 bis in die Bearbeitungsposition 14 hinein konstant zu halten.

Wenn im Ausführungsbeispiel das Werkstück 4 eine Ist-Länge von 599 mm anstelle der 600 mm Soll-Länge hat, müssen die geometrischen Maße des Werkstücks 4 korrigiert und die korrigierten Werte in die Bewegungsprogrammierung übernommen werden. Wenn die vorderen Linearmotoren 16 beim Übergang von der Bestückungsin die Klemmposition in der Position 620 mm stehen bleiben, laufen die hinteren Linearmotoren 16 aus der Position 0 mm in die Position 21 mm, um die Klemmposition 12 zu erreichen. Um in die Bearbeitungsposition 14 zu gelangen, laufen die vorderen Linearmotoren 16 von der Position 620 mm in die Position 4200 mm, die hinteren Linearmotoren aus der Position 21 mm in die Position 3601 mm. Die zurückzulegende Strecke von 3580 mm bleibt gleich, für die hinteren Linearmotoren 16 ergeben sich aber geänderte Start- und Zielpositionen. Wenn das Werkstück eine Ist-Länge von 601 mm aufweist, erreichen die hinteren Linearmotoren 16 die Klemmposition 12 bereits in der Position 19 mm und erreichen die Bearbeitungsposition in der Position 3599 mm.

Durch diese Korrektur der Start- und Zielpositionen der Linearmotoren 16 anhand der gemessenen geometrischen Maße des Werkstücks ist es möglich, die Klemmung des Werkstücks 4 während der gesamten Förderung durch die synchron zueinander bewegten Linearmotoren 16 aufrecht zu erhalten, ohne dass deshalb eine direkte Messung und Regelung der Klemmkräfte erforderlich wäre.

Durch die Anlage der Klemmelemente 6 an das Werkstück 4 ergibt sich für das Werkstück 4 eine klar definierte Lage, in der die Bearbeitungswerkzeuge 8 an dem Werkstück 4 Bearbeitungen vornehmen können. An dem Portal 10 können mehrere Bearbeitungswerkzeuge 8 befestigt sein, die gleichzeitig Bearbeitungen an Werkstück 4 vornehmen. In einem Bewegungsschlitten für die Bearbeitungswerkzeuge 8 können auch mehrere Werkzeuge vorgehalten sein, die nacheinander oder gleichzeitig jeweilige Bearbeitungen vornehmen. Die Bearbeitungswerkzeuge 8 können auch höhenverstellbar in der z-Achse ausgebildet sein, wie beispielsweise Bohrer, die sich in das von ihnen ausgebohrte Bohrloch absenken. Für unterschiedliche Bohrlochgrößen können unterschiedliche Bohrer vorgehalten sein oder die Bearbeitungswerkzeuge 8 setzen oder pressen Beschläge oder sonstige Teile in vorgebohrte Löcher ein, spritzen Kleber in ausgefräste Verbindungsnuten oder dergleichen. Die Bearbeitungswerkzeuge 8 können auch mittels Linearmotoren 24 entlang dem Portal 10 beweglich sein. Bei Werkstücken, insbesondere aus einem metallischen Werkstoff, können auch beispielsweise spanende Bearbeitungen wie Fräsen, Räumen und dergleichen oder schleifende oder polierende Arbeitsgänge vorgenommen werden.

Die Klemmelemente 6 sind in Querrichtung y von den Linearmotoren 20 beweglich, die die Trägerschienen 18 in Querrichtung entlang der Trägerschiene 22 bewegen können. Damit sind die Klemmelemente 6 in Längsrichtung x von den Linearmotoren 16 und in Querrichtung y von den Linearmotoren 20 beliebig positionierbar. Die Linearmotoren 16 und 20 können gleichzeitig oder nacheinander von der Steuerung nach Bedarf bewegt werden. Bei einer gleichzeitigen Bewegung der Linearmtoren 16 und 20 ergeben sich Bewegungsbahnen für die Klemmelemente 6, die schräg zur x- und y-Achse verlaufen und auch bogenförmig gekrümmt sein können.

Zusammenfassend finden sich also im Ausführungsbeispiel insgesamt acht Linearmotoren, davon vier Linearmotoren 16 für die Bewegung der vier Klemmelemente 6 in Längsrichtung x, zwei Linearmotoren 20 für die Bewegung der beiden Trägerschienen 18 in Querrichtung y sowie die beiden Linearmotoren 24 zur Bewegung der Bearbeitungswerkzeuge 8 entlang des Portals 10. Die Bewegung dieser Linearmotoren 16, 20, 24 wird im Ausführungsbeispiel durch eine gemeinsame Steuerung miteinander koordiniert. Über die verwendeten acht Linearmotoren kann eine hochgradige Präzision bei der Beförderung und Positionierung des Werkstücks 4 und der Einstellung der Bearbeitungswerkzeuge 8 in einer Arbeitsstellung erreicht werden, wobei die starke Beschleunigung und schnelle Bewegung der Linearmotoren 16, 20, 24 sehr hohe Bewegungsgeschwindigkeiten und Taktzeiten erlaubt. Auch die Einstellung der Klemmkräfte, mit denen die Klemmelemente 6 das Werkstück 4 halten, gelingt über die präzise Ansteuerung der Linearmotoren 16, 20 durch die gemeinsame Steuerung.

In einem Ausführungsbeispiel der Erfindung wurde eine Simotion PLC-Steuerung und Sinamics-Leistungsteile für die Servomotoren verwendet. In einem gesonderten PC-Programm werden Kundendaten übernommen und Tabellen gelistet, in Werkstückdatensätze konvertiert, Werkzeuglisten und Bearbeitungslisten werden erstellt, Korrekturen werden verrechnet, die Bearbeitungskoordinaten festgelegt und in die Simotion PLC-Steuerung transferiert. Durch das PLC-Softwareprogramm wird der komplette Maschinenablauf gesteuert. Für die Motorpositionen - einzeln oder im Gleichlauf - können Funktionen aus der Siemens-Bibliothek benutzt werden, die hierfür zur Verfügung stehen. Die Positionsdaten und Auswertungen liefert das PC-Programm.

Beim Programmstart werden die Kundendaten im PC-Programm aufbereitet und an die Simotion PLC-Steuerung transferiert und dort in einer Art Tabelle hinterlegt. Über einen Pointer werden die Daten aus den Tabellenzeilen ausgelesen und ausgewertet. Kennungen aus dem Datensatz legen fest, ob die Motoren alle einzeln positioniert werden müssen oder ob ein Transportverband gebildet wird, in dem ein Werkstück geklemmt und bewegt wird. Ein Transportverband besteht aus mehreren Motoren, die über eine virtuelle Achse nach dem Master-/Slave-Prinzip synchronisiert werden. Dieser Master wird in der Siemens-Konfiguration erstellt, dabei handelt es sich um die Gleichlauf-Technologie. PLC-Funktionen aus der Siemens-Bibliothek erlauben es, die Motoren einzeln oder im Gleichlauf zu betreiben. Der Master wird über die PLC-Software aktiviert und mit Daten versorgt und bleibt so lange erhalten, bis er softwaremäßig wieder aufgelöst wird. Alle Berechnungen wie Nullpunktverschiebungen, Werkstücknullpunkte und dergleichen sind bereits im PC-Programm berücksichtigt. Dafür gibt es Menüs wie Werkzeugverwaltung, Nullpunkte Werkzeuge, Nullpunkte Transportverband und dergleichen, die für die Berechnungen benötigt werden.

In der Steuerung können die Maße für ein Werkstück 4 als Sollwerte verfügbar sein, beispielsweise in einer entsprechenden Teiledatei, auf die die Steuerung Zugriff hat. So kann für das Werkstück 4 ein Maß von 300 mm X 500 mm als Soll-Maß vorgesehen sein. Das tatsächliche Maß eines eingelegten Werkstücks 4 kann allerdings auch vom Soll-Maß abweichende 298 mm X 501 mm betragen. Da die Maßabweichung in diesem Beispielsfall nur wenige mm beträgt, kann das Werkstück 4 zunächst in einer Bestückungsposition der Klemmelemente 6 auf die Auflegefläche 6a aufgelegt werden. Sodann muss die Steuerung die Klemmelemente 6 in die Klemmposition 12 verfahren, um das Werkstück 4 fest zu halten. Da das Werkstück 4 in Längsrichtung 2 mm kürzer ist als das Soll-Maß, würden die Klemmelemente 6 das Werkstück 4 in Längsrichtung x nicht einklemmen, wenn die Klemmelemente 6 nur auf die Positionen bewegt würden, die dem Soll-Maß entsprechen. Um trotzdem eine Klemmung herbeizuführen, müssen die Klemmelemente 6 vielmehr solange weiter aufeinander zugeführt werden, bis über einen Sensor eine Klemmwirkung der Klemmelemente 6 an die Steuerung übermittelt wird.

Auch bei der nur 1 mm betragenen Abweichung des Werkstücks 4 vom Soll-Maß in Querrichtung y würde sich ein Problem ergeben, wenn die Steuerung versuchen würde, die Klemmelemente 6 nur auf das Soll-Maß einzustellen. Da das Werkstück 4 um 1 mm zu breit ist, stellt sich die Klemmwirkung in Querrichtung y schon ein, wenn die Klemmelemente 6 noch nicht ihre nach Soll-Maß vorgesehene Klemmposition erreicht haben. Bei der Postitionierbewegung in Querrichtung y mit den Linearmotoren 20 müssen die Klemmelemente 6 also vor Erreichen ihrer Sollposition gestoppt werden, um einen Schaden am Werkstück 4 und/oder an den Klemmelementen 6 zu vermeiden. Auch dazu ist es sinnvoll, die Klemmelemente 6 mittels eines Sensors zu überwachen, inwieweit die Klemmposition 12 beim Werkstück 4 schon vor der Sollposition erreicht ist.

Befinden sich die Klemmelemente 6 sensorgestützt in ihrer Klemmposition 12, die um bestimmte Beträge von der Sollposition gemäß den Soll-Maßen abweicht, so können die Abweichungen in x, y-Richtung von der Steuerung erfasst werden. Die Steuerung kann die auf diese Weise ermittelten Ist-Maße des Werkstückes 4 für die Steuerung und Regelung der Linearmotoren 16 entlang der Förderstrecke übernehmen, so dass die Klemmelemente 6 über die gesamte Förderstrecke hinweg in einer klemmenden Lage im Verhältnis zu Werkstück 4 verbleiben.

Wenn die Bearbeitungswerkzeuge 8 in der Bearbeitungsposition 14 ihre Bearbeitungen vornehmen sollen, muss die Maßabweichung des Werkstückes 4 bei den Bearbeitungsvorgängen durch die Bearbeitungswerkzeuge 8 berücksichtigt werden. Dies kann in der Weise geschehen, dass die von der Steuerung erfassten Maßabweichungen dazu genutzt werden, um die Bearbeitungspunkte der Bearbeitungswerkzeuge 8 in geeigneter Weise von einer Solllage in eine aus den Maßabweichungen errechnete neue Ist-Lage verändert werden. Trotz der von der Steuerung festgestellten Maßabweichungen kann das Werkstück 4 trotzdem noch auf eine Weise bearbeitet werden, bei der die aufgetretenen Maßunterschiede im fertigen Produkt, in dem das Werkstück 4 verbaut ist, nicht auffallen.

Nach einer erfolgten Bearbeitung kann das Werkstück 4 von den Klemmelementen 6 wieder über eine zweite Förderstrecke in die Bestückungsposition zurück verbracht werden, wo es dann manuell von einer Person, von einem Roboter oder von einem Förderportal übernommen werden kann. Das Werkstück 4 kann auch aus der Bearbeitungsposition 14 in die von der Klemmposition 12 entgegen gesetzte Richtung als zweite Förderstrecke befördert werden, um es einer sich daran anschließenden Weiterverarbeitung zuzufördern. Die Vorrichtung 2 ist dann eine in einen Materialfluss eingebundene Maschine, in der das Material in nur eine Richtung durch die aufgestellten Maschinen hindurch läuft. Nach dem Entnehmen des Werkstücks 4 können die Klemmelemente 6 sodann mit hoher Geschwindigkeit wieder in die Bestückungsposition auf der anderen Seite der Vorrichtung 2 zurück verfahren werden.

Im Ausführungsbeispiel 1 und 2 ist nur ein einziges Portal 10 mit zwei Linearmotoren 24 gezeigt, abweichend davon kann an einem Portal 10 auch nur ein Linearmotor mit nur einem Bearbeitungswerkzeug oder mehr als zwei Linearmotoren mit einer Vielzahl von Bearbeitungswerkzeugen 8 vorgesehen sein. Genauso ist es möglich, dass sich über eine Förderstrecke der Werkstücke 4 durch eine Vorrichtung 2 hinweg mehrere Portale 10 oder sonstige Haltevorrichtungen für Bearbeitungswerkzeuge 8 befinden, die über die Förderstrecke hinweg verschiedene Bearbeitungen an einem Werkstück 4 vornehmen.

## Patentansprüche

1. Vorrichtung (2) zur Beförderung von Werkstücken (4) mit einer entlang einer Förderstrecke beweglichen Haltevorrichtung, Bearbeitungswerkzeugen (8) und einer elektronischen Steuerung mit einer Software zur Steuerung der Antriebe, wobei
- die Haltevorrichtung mehrere mittels eines jeweiligen Linearmotors unabhängig voneinander bewegliche Klemmelemente (6) aufweist,
- die Klemmelemente (6) mittels der Linearmotoren (16)
in eine Bestückungsposition,
aus der Bestückungsposition in eine Klemmposition (12),
aus der Klemmposition (12) entlang einer ersten Förderstrecke synchron in eine Bearbeitungsposition (14) und
aus der Bearbeitungsposition (14) entlang einer zweiten Förderstrecke synchron in eine Entnahmeposition
softwaregesteuert beweglich sind,
- die elektronische Steuerung mittels einer Software die von Messmitteln gemessenen geometrischen Maße des Werkstücks (4) in Bewegungsprofildaten der Linearmotoren (16) verrechnet,
- die Klemmelemente (6) durch die Linearmotoren (16) gemäß den jeweiligen von der elektronischen Steuerung errechneten Bewegungsprofildaten entlang der ersten Förderstrecke aus der Klemmposition (12) in die Bearbeitungsposition (14) und entlang der zweiten Förderstrecke aus der Bearbeitungsposition (14) in die Entnahmeposition softwaregesteuert beweglich sind, und
- die Linearmotoren (16) über die Bewegungsprofildaten die in der Klemmposition gemessenen Abstände der Klemmelemente (6) relativ zueinander während der Bewegung entlang der Förderstrecke beibehalten und dadurch die Klemmung des Werkstücks (4) zwischen den Klemmelementen (6) während der Bewegung der Klemmelemente (6) entlang zumindest einer Förderstrecke beibehalten ist, **dadurch gekennzeichnet, dass**
die Vorrichtung Messmittel aufweist, mit denen die geometrischen Maße des Werkstücks in der Klemmposition (12) messbar sind, und ein oder mehrere Linearmotoren (16) einen Sensor aufweisen, mit dem das Erreichen der Klemmposition (12) messbar ist.

2. Vorrichtung (2) nach Anspruch 1, **dadurch gekennzeichnet, dass** die Vorrichtung (2) eines oder mehrere Bearbeitungswerkzeuge (8) zur Bearbeitung der Werkstücke (4) aufweist, ein Werkstück (4) mit den Bearbeitungswerkzeugen (8) in der Bearbeitungsposition (14) bearbeitbar ist, die Klemmung mit den Klemmelementen (6) während der Bearbeitung durch die Bearbeitungswerkzeuge (8) aufrecht erhalten bleibt und die Steuerung die Bewegung der Bearbeitungswerkzeuge (8) und der Klemmelemente (6) in die Bearbeitungsposition (14) und in der Bearbeitungsposition (14) miteinander koordiniert.

3. Vorrichtung (2) nach einem der vorhergehenden Ansprüche, **dadurch gekennzeichnet, dass** in der Klemmposition (12) ein erstes Klemmelement (6) als Festanschlag dient und ein zweites Klemmelement (6) aus seiner Bestückungsposition gegen das erste Klemmelement (6) beweglich ist.

4. Vorrichtung (2) nach einem der vorhergehenden Ansprüche, **dadurch gekennzeichnet, dass** das erste und/oder zweite Klemmelement (6) eine Kontaktfläche zum Werkstück (4) aus einem nichtmetallischen Werkstoff aufweist.

5. Vorrichtung (2) nach einem der vorhergehenden Ansprüche 3 oder 4, **dadurch gekennzeichnet, dass** die elektronische Steuerung einen Bremsmodus, in dem nach einem Kontaktsignal eines Sensors zur Messung der Erreichung der Klemmposition die Bewegung der Klemmelemente (6) bis zu einer Stillstandsposition anhaltbar ist, und einen Rückstellmodus aufweist, in dem ein oder mehrere Klemmelemente (6) aus der Stillstandsposition zurück in die Klemmposition beweglich sind.

6. Vorrichtung (2) nach einem der vorhergehenden Ansprüche 3 bis 5, **dadurch gekennzeichnet, dass** in der Steuerung Soll-Maße für das Werkstück (4) verfügbar sind und die Steuerung
- die Klemmelemente (6) anhand der Soll-Maße für das Werkstück (4) in die Bestückungsposition und aus der Bestückungsposition in die Klemmposition (12) steuert,
- die Ist-Position eines oder mehrerer Linearmotoren (16) in ihrer Klemmposition (12) ermittelt und daraus korrigierte Ist-Maße für das Werkstück (4) bestimmt, und
- die Bewegungen der Klemmelemente (6) entlang der Förderstrecken mittels der korrigierten Ist-Maße für das Werkstück (4) steuert.

7. Vorrichtung (2) nach einem der vorhergehenden Ansprüche, **dadurch gekennzeichnet, dass** die Vorrichtung (2) zumindest eine querbeweglich angeordnete Trägerschiene aufweist, auf der zwei längsbewegliche Linearmotoren (16) angeordnet sind.

8. Vorrichtung (2) nach einem der vorhergehenden Ansprüche, **dadurch gekennzeichnet, dass** einem oder mehreren Klemmelementen (6) eine Auflegefläche (6a) zugeordnet ist.

9. Verfahren zur Beförderung von Werkstücken (4) mit einer entlang einer Förderstrecke beweglichen Haltevorrichtung, Bearbeitungswerkzeugen (8) und einer elektronischen Steuerung mit einer Software zur Steuerung der Antriebe, wobei
- als Haltevorrichtung mehrere mittels eines jeweiligen Linearmotors unabhängig voneinander bewegliche Klemmelemente (6) verwendet werden,
- die Klemmelemente (6) mittels der Linearmotoren (16)
in eine Bestückungsposition,
aus der Bestückungsposition in eine Klemmposition (12),
aus der Klemmposition (12) entlang einer ersten Förderstrecke synchron in eine Bearbeitungsposition (14) und
aus der Bearbeitungsposition (14) entlang einer zweiten Förderstrecke synchron in eine Entnahmeposition
softwaregesteuert bewegt werden,
- die elektronische Steuerung mittels einer Software die von Messmitteln gemessenen geometrischen Maße des Werkstücks (4) in Bewegungsprofildaten der Linearmotoren (16) verrechnet,
- die Klemmelemente (6) durch die Linearmotoren (16) gemäß den jeweiligen von der elektronischen Steuerung errechneten Bewegungsprofildaten entlang der ersten Förderstrecke aus der Klemmposition (12) in die Bearbeitungsposition (14) und entlang der zweiten Förderstrecke aus der Bearbeitungsposition (14) in die Entnahmeposition softwaregesteuert bewegt werden, und
- die Linearmotoren (16) über die Bewegungsprofildaten die in der Klemmposition gemessenen Abstände der Klemmelemente (6) relativ zueinander während der Bewegung entlang der Förderstrecke beibehalten und dadurch die Klemmung des Werkstücks (4) zwischen den Klemmelementen (6) während der Bewegung der Klemmelemente (6) entlang zumindest einer Förderstrecke beibehalten ist, **dadurch gekennzeichnet, dass**
von Messmitteln die geometrischen Maße des Werkstücks in der Klemmposition (12) gemessen werden und das Erreichen der Klemmposition (12) von einem oder mehreren Linearmotoren (16) mit einem Sensor gemessen wird.

10. Verfahren nach Anspruch 9, **dadurch gekennzeichnet, dass** das Verfahren auch die Bearbeitung der Werkstücke (4) durch eines oder mehrere Bearbeitungswerkzeuge (8) mit umfasst, ein Werkstück (4) mit den Bearbeitungswerkzeugen (8) in der Bearbeitungsposition (14) bearbeitet wird, die Klemmung mit den Klemmelementen (6) während der Bearbeitung durch die Bearbeitungswerkzeuge (8) aufrecht erhalten bleibt und die Steuerung die Bewegung der Bearbeitungswerkzeuge (8) und der Klemmelemente (6) in die Bearbeitungsposition (14) und in der Bearbeitungsposition (14) miteinander koordiniert.

11. Verfahren nach einem der vorhergehenden Ansprüche 9 oder 10, **dadurch gekennzeichnet, dass** in der Klemmposition (12) ein erstes Klemmelement (6) als Festanschlag verwendet wird und ein zweites Klemmelement (6) aus seiner Bestückungsposition gegen das erste Klemmelement (6) bewegt wird

12. Verfahren nach einem der vorhergehenden Ansprüche 9 bis 11, **dadurch gekennzeichnet, dass** in der Steuerung Soll-Maße für das Werkstück (4) verfügbar sind und die Steuerung
- die Klemmelemente (6) anhand der Soll-Maße für das Werkstück (4) in die Bestückungsposition und aus der Bestückungsposition in die Klemmposition (12) steuert,
- die Ist-Position eines oder mehrerer Linearmotoren (16) in ihrer Klemmposition (12) ermittelt und daraus korrigierte Ist-Maße für das Werkstück (4) bestimmt, und
- die Bewegungen der Klemmelemente (6) entlang der Förderstrecken mittels der korrigierten Ist-Maße für das Werkstück (4) steuert.

13. Verfahren nach einem der vorhergehenden Ansprüche 9 bis 12, **dadurch gekennzeichnet, dass** die Vorrichtung (2) zumindest eine querbeweglich angeordnete Trägerschiene aufweist, auf der zwei längsbewegliche Linearmotoren (16) angeordnet sind, und die Steuerung die Klemmposition (12) der Klemmelemente (6) auch durch eine Verstellung der Position der Trägerschiene herbeiführt.

14. Verfahren nach einem der vorhergehenden Ansprüche 9 bis 13, **dadurch gekennzeichnet, dass** die elektronische Steuerung
- in einen Bremsmodus umschaltet, nachdem ein Sensor einen Kontakt eines Klemmelements mit dem Werkstück gemeldet hat,
- im Bremsmodus die Bewegung der Klemmelemente (6) bis zu einer Stillstandsposition anhält,
- nach dem Erreichen der Stillstandsposition in einen Rückstellmodus umschaltet, und
- im Rückstellmodus ein oder mehrere Klemmelemente (6) aus der Stillstandsposition zurück in die Klemmposition bewegt.

## Claims

1. Device (2) for conveying workpieces (4) comprising a retaining device which can be moved along a conveying path, processing tools (8) and an electronic controller comprising software for controlling the drives,
- the retaining device comprising a plurality of clamping elements (6) which can be moved independently of one another by means of a respective linear motor,
- it being possible for the clamping elements (6) to be moved by means of the linear motors (16) and in a software-controlled manner into a placement position, from the placement position into a clamping position (12), from the clamping position (12) along a first conveying path synchronously into a processing position (14), and from the processing position (14) along a second conveying path synchronously into a removal position,
- the electronic controller converting, by means of software, the geometric dimensions of the workpiece (4) measured by measuring means into movement profile data of the linear motors (16),
- it being possible for the clamping elements (6) to be moved by the linear motors (16), in a software-controlled manner, according to the respective movement profile data calculated by the electronic controller, along the first conveying path from the clamping position (12) into the processing position (14) and along the second conveying path from the processing position (14) into the removal position, and
- the linear motors (16) maintaining the spacings of the clamping elements (6), measured in the clamping position, relative to one another, by means of the movement profile data during movement along the conveying path, and thus the clamping of the workpiece (4) between the clamping elements (6) being maintained during movement of the clamping elements (6) along at least one conveying path, **characterised in that** the device comprises measuring means which can measure the geometric dimensions of the workpiece in the clamping position (12), and one or more linear motors (16) comprising a sensor which can measure that the clamping position (12) has been reached.

2. Device (2) according to claim 1, **characterised in that** the device (2) comprises one or more processing tools (8) for processing the workpiece (4), a workpiece (4) can be processed by the processing tools (8) in the processing position (14), the clamping by the clamping elements (6) is maintained during processing by the processing tools (8), and the controller coordinates the movement of the processing tools (8) and of the clamping elements (6) into the processing position (14) and in the processing position (14).

3. Device (2) according to either of the preceding claims, **characterised in that**, in the clamping position (12), a first clamping element (6) acts as a fixed stop and a second clamping element (6) is movable from the placement position thereof against the first clamping element (6).

4. Device (2) according to any of the preceding claims, **characterised in that** the first and/or second clamping element (6) comprises a contact surface in contact with the workpiece (4) which comprises a non-metal material.

5. Device (2) according to either of the preceding claims 3 or 4, **characterised in that** the electronic controller has a braking mode in which, following a contact signal of a sensor for measuring that the clamping position has been reached, the movement of the clamping elements (6) can be brought to a stationary position, and a return mode in which one or more clamping elements (6) can be moved back from the stationary position into the clamping position.

6. Device (2) according to any of the preceding claims 3 to 5, **characterised in that** target dimensions for the workpiece (4) are available in the controller, and the controller
- moves the clamping elements (6), on the basis of the target dimensions for the workpiece (4), into the placement position and from the placement position into the clamping position (12),
- detects the actual position of one or more linear motors (16) in the clamping position (12) thereof, and determines therefrom corrected actual dimensions for the workpiece (4), and
- controls the movements of the clamping elements (6) along the conveying paths by means of the corrected actual dimensions for the workpiece (4).

7. Device (2) according to any of the preceding claims, **characterised in that** the device (2) comprises at least one support rail which is arranged so as to be movable in a transverse direction and on which two linear motors (16), which are movable in the longitudinal direction, are arranged.

8. Device (2) according to any of the preceding claims, **characterised in that** a support surface (6a) is assigned to one or more clamping elements (6).

9. Method for conveying workpieces (4) comprising a retaining device which can be moved along a conveying path, processing tools (8) and an electronic controller comprising software for controlling the drives,
- it being possible for a plurality of clamping elements (6) which can be moved independently of one another by means of a respective linear motor to be used as the retaining device,
- the clamping elements (6) being moved by means of the linear motors (16) and in a software-controlled manner into a placement position, from the placement position into a clamping position (12), from the clamping position (12) along a first conveying path synchronously into a processing position (14), and from the processing position (14) along a second conveying path synchronously into a removal position,
- the electronic controller converting, by means of software, the geometric dimensions of the workpiece (4) measured by measuring means into movement profile data of the linear motors (16),
- the clamping elements (6) being moved by the linear motors (16), in a software-controlled manner, according to the respective movement profile data calculated by the electronic controller, along the first conveying path from the clamping position (12) into the processing position (14) and along the second conveying path from the processing position (14) into the removal position, and
- the linear motors (16) maintaining the spacings of the clamping elements (6), measured in the clamping position, relative to one another, by means of the movement profile data during movement along the conveying path, and thus the clamping of the workpiece (4) between the clamping elements (6) being maintained during movement of the clamping elements (6) along at least one conveying path, **characterised in that** measuring means measure the geometric dimensions of the workpiece in the clamping position (12), and one or more linear motors (16) measure, by means of a sensor, that the clamping position (12) has been reached.

10. Method according to claim 9, **characterised in that** the method also includes processing the workpieces (4) using one or more processing tools (8), a workpiece (4) is processed by the processing tools (8) in the processing position (14), the clamping by the clamping elements (6) is maintained during processing by the processing tools (8), and the controller coordinates the movement of the processing tools (8) and of the clamping elements (6) into the processing position (14) and in the processing position (14).

11. Method according to either of the preceding claims 9 or 10, **characterised in that**, in the clamping position (12), a first clamping element (6) is used as a fixed stop and a second clamping element (6) is moved from the placement position thereof against the first clamping element (6).

12. Method according to any of the preceding claims 9 to 11, **characterised in that** target dimensions for the workpiece (4) are available in the controller, and the controller
- moves the clamping elements (6), on the basis of the target dimensions for the workpiece (4), into the placement position and from the placement position into the clamping position (12),
- detects the actual position of one or more linear motors (16) in the clamping position (12) thereof, and determines therefrom corrected actual dimensions for the workpiece (4), and
- controls the movements of the clamping elements (6) along the conveying paths by means of the corrected actual dimensions for the workpiece (4).

13. Method according to any of the preceding claims 9 to 12, **characterised in that** the device (2) comprises at least one support rail which is arranged so as to be movable in a transverse direction and on which two linear motors (16), which are movable in the longitudinal direction, are arranged, and the control also produces the clamping position (12) of the clamping elements (6) by adjusting the position of the support rail.

14. Method according to any of the preceding claims 9 to 13, **characterised in that** the electronic controller
- switches to a braking mode after a sensor has signalled contact between a clamping element and the workpiece,
- brings the movement of the clamping elements (6) to a stationary position in the braking mode,
- switches to a return mode once the stationary position has been reached and,
- in the return mode, moves one or more clamping elements (6) from the stationary position back into the clamping position.

## Revendications

1. Dispositif (2) destiné au transport de pièces à usiner (4), comprenant un système de retenue mobile le long d'un trajet de transport, des outils de traitement (8) et une commande électronique avec un logiciel de commande de l'entraînement, dans lequel :
le système de retenue présente plusieurs éléments de serrage (6) déplacés indépendamment les uns des autres au moyen d'un moteur linéaire respectif,
les éléments de serrage (6) sont déplacés selon la commande logicielle au moyen des moteurs linéaires (16)
dans une position d'équipement,
de la position d'équipement dans une position de serrage (12),
de la position de serrage (12) le long d'un premier trajet de transport de manière synchrone dans une position de traitement (14) et
de la position de traitement (14) le long d'un second trajet de transport de manière synchrone dans une position d'enlèvement,
la commande électronique calcule au moyen d'un logiciel les dimensions géométriques, mesurées par des moyens de mesure, de la pièce à usiner (4) dans des données de profil de déplacement des moteurs linéaires (16),
les éléments de serrage (6) sont déplacés selon la commande logicielle au moyen des moteurs linéaires (16) suivant les données de profil de déplacement respectifs calculés par la commande électronique le long du premier trajet de transport de la position de serrage (12) dans la position de traitement (14) et le long du second trajet de transport de la position de traitement (14) dans la position d'enlèvement, et
les moteurs linéaires (16) maintiennent, par l'intermédiaire des données de profil de déplacement, les distances mesurées dans la position de serrage des éléments de serrage (6) les unes par rapport aux autres pendant le déplacement le long du trajet de transport et le serrage de la pièce à usiner (4) est ainsi maintenu entre les éléments de serrage (6) pendant le déplacement des éléments de serrage (6) le long d'au moins un trajet de transport,
**caractérisé en ce que**
le dispositif présente des moyens de mesure qui permettent de mesurer les dimensions géométriques de la pièce à usiner dans la position de serrage (12), et un ou plusieurs moteurs linéaires (16) présentent un capteur qui permet de mesurer l'atteinte de la position de serrage (12).

2. Dispositif (2) selon la revendication 1, **caractérisé en ce que** le dispositif (2) présente un ou plusieurs outils de traitement (8) destiné(s) au traitement des pièces à usiner (4), une pièce à usiner (4) peut être traitée avec les outils de traitement (8) dans la position de traitement (14), le serrage est conservé avec les éléments de serrage (6) pendant le traitement par les outils de traitement (8) et la commande coordonne le déplacement des outils de traitement (8) et des éléments de serrage (6) dans la position de traitement (14) et les uns avec les autres dans la position de traitement (14).

3. Dispositif (2) selon une des revendications précédentes, **caractérisé en ce que**, dans la position de serrage (12), un premier élément de serrage (6) sert de butée fixe et un second élément de serrage (6) est mobile depuis sa position d'équipement contre le premier élément de serrage (6).

4. Dispositif (2) selon une des revendications précédentes, **caractérisé en ce que** le premier et/ou second élément de serrage (6) présente une surface de contact par rapport à la pièce à usiner (4) composée d'une matière non métallique.

5. Dispositif (2) selon une des revendications 3 ou 4, **caractérisé en ce que** la commande électronique présente un mode de freinage, dans lequel, après un signal de contact d'un capteur de mesure de l'atteinte de la position de serrage, le déplacement des éléments de serrage (6) peut être arrêté jusqu'à une position d'arrêt, et un mode de rétablissement dans lequel un ou plusieurs éléments de serrage (6) sont redéplacés de la position d'arrêt dans la position de serrage.

6. Dispositif (2) selon une des revendications 3 à 5, **caractérisé en ce que**, dans la commande, des dimensions théoriques sont disponibles pour la pièce à usiner (4) et la commande
commande, à l'aide des dimensions théoriques pour la pièce à usiner (4), les éléments de serrage (6) dans la position d'équipement et de la position d'équipement dans la position de serrage (12),
détermine la position réelle d'un ou plusieurs moteurs linéaires (16) dans la position de serrage (12) et en définit des dimensions réelles corrigées pour la pièce à usiner (4), et
commande les déplacements des éléments de serrage (6) le long des trajets de transport au moyen des dimensions réelles corrigées pour la pièce à usiner (4).

7. Dispositif (2) selon une des revendications précédentes, **caractérisé en ce que** le dispositif (2) présente au moins un rail support disposé de manière mobile transversalement, sur lequel deux moteurs linéaires (16) mobiles dans le sens de la longueur sont disposés.

8. Dispositif (2) selon une des revendications précédentes, **caractérisé en ce qu'**un ou plusieurs éléments de serrage (6) sont associés à une surface d'appui (6a).

9. Procédé destiné au transport de pièces à usiner (4) comprenant un système de retenue mobile le long d'un trajet de transport, des outils de traitement (8) et une commande électronique avec un logiciel de commande de l'entraînement, dans lequel,
plusieurs éléments de serrage (6) déplacés indépendamment les uns des autres au moyen d'un moteur linéaire respectif sont utilisés comme système de retenue,
les éléments de serrage (6) sont déplacés selon la commande logicielle au moyen des moteurs linéaires (16)
dans une position d'équipement,
de la position d'équipement dans une position de serrage (12),
de la position de serrage (12) le long d'un premier trajet de transport de manière synchrone dans une position de traitement (14) et
de la position de traitement (14) le long d'un second trajet de transport de manière synchrone dans une position d'enlèvement,
la commande électronique calcule au moyen d'un logiciel les dimensions géométriques, mesurées par des moyens de mesure, de la pièce à usiner (4) dans des données de profil de déplacement des moteurs linéaires (16),
les éléments de serrage (6) sont déplacés selon la commande logicielle au moyen des moteurs linéaires (16) suivant les données de profil de déplacement respectifs calculés par la commande électronique le long du premier trajet de transport de la position de serrage (12) dans la position de traitement (14) et le long du second trajet de transport de la position de transport (14) dans la position d'enlèvement, et
les moteurs linéaires (16) maintiennent par l'intermédiaire des données de profil de déplacement les distances mesurées dans la position de serrage des éléments de serrage (6) les unes par rapport aux autres pendant le déplacement le long du trajet de transport et le serrage de la pièce à usiner (4) est ainsi maintenu entre les éléments de serrage (6) pendant le déplacement des éléments de serrage (6) le long d'au moins un trajet de transport,
**caractérisé en ce que**
des moyens de mesure mesurent les dimensions géométriques de la pièce à usiner dans la position de serrage (12), et l'atteinte de la position de serrage (12) est mesurée par un ou plusieurs moteurs linéaires (16) qui présentent un capteur.

10. Procédé selon la revendication 9, **caractérisé en ce que** le procédé comprend également le traitement des pièces à usiner (4) par un ou plusieurs outils de traitement (8), une pièce à usiner (4) pouvant être traitée avec les outils de traitement (8) dans la position de traitement (14), le serrage étant conservé avec les éléments de serrage (6) pendant le traitement par les outils de traitement (8) et la commande coordonne le déplacement des outils de traitement (8) et des éléments de serrage (6) dans la position de traitement (14) et les uns avec les autres dans la position de traitement (14).

11. Procédé selon une des revendications précédentes 9 ou 10, **caractérisé en ce que**, dans la position de serrage (12), un premier élément de serrage (6) sert de butée fixe et un second élément de serrage (6) est mobile depuis sa position d'équipement contre le premier élément de serrage (6).

12. Procédé selon une des revendications précédentes 9 à 11, **caractérisé en ce que**, dans la commande, des dimensions théoriques sont disponibles pour la pièce à usiner (4) et la commande
commande les éléments de serrage (6) à l'aide des dimensions théoriques pour la pièce à usiner (4) dans la position d'équipement et de la position d'équipement dans la position de serrage (12),
détermine la position réelle d'un ou plusieurs moteurs linéaires (16) dans la position de serrage (12) et en définit des dimensions réelles corrigées pour la pièce à usiner (4), et
commande les déplacements des éléments de serrage (6) le long des trajets de transport au moyen des dimensions réelles corrigées pour la pièce à usiner (4).

13. Procédé selon une des revendications précédentes 9 à 12, **caractérisé en ce que** le dispositif (2) présente au moins un rail support disposé de manière mobile transversalement, sur lequel deux moteurs linéaires (16) mobiles dans le sens de la longueur sont disposés et la commande provoque la position de serrage (12) des éléments de serrage (6) même avec un déplacement de la position du rail support.

14. Procédé selon une des revendications précédentes 9 à 13, **caractérisé en ce que** la commande électronique
passe dans un mode de freinage, après qu'un capteur ait annoncé un contact d'un élément de serrage avec la pièce à usiner,
dans le mode de freinage, arrête le déplacement des éléments de serrage (6) jusqu'à une position d'arrêt,
après avoir atteint la position d'arrêt, passe dans un mode de rétablissement, et
dans le mode de rétablissement, redéplace un ou plusieurs éléments de serrage (6) de la position d'arrêt dans la position de serrage.
